# EUROPEAN PATENT APPLICATION

(11) **EP 4 629 367 A2**
(43) Date of publication of application: **08.10.2025**
(21) Application number: 24223138.9
(22) Date of filing: 24.12.2024
(51) Int. Cl.: H01M 10/04, B29C 65/02, B29C 65/18, B29C 65/00, H01M 10/052, H01M 10/0585, H01M 50/105, H01M 50/178, B29C 53/06

(54) **APPARATUS FOR FORMING FOLDING GUIDE LINE AND BATTERY CELL**

(30) Priority: 01.04.2024 KR 20240043956
(71) Applicant: SK On Co., Ltd., Seoul 03161 (KR)
(72) Inventor: KIM, Hong, 34124 Daejeon (KR); PARK, Jong Mo, 34124 Daejeon (KR); LEE, Ju Heon, Daejeon (KR); LEE, Jun Woo, 34124 Daejeon (KR)
(74) Representative: Stolmár & Partner Patentanwälte PartG mbB

(57) **Abstract**

An apparatus for forming a folding guide line forming a folding guide portion in a sealing portion of a battery cell, includes a first pressing tool and a second pressing tool, forming the folding guide portion by placing the sealing portion therebetween and pressing the sealing portion, wherein the first pressing tool includes a first pressing surface having a flat shape and an accommodating groove having a shape recessed from the first pressing surface, the second pressing tool includes a second pressing surface having a flat shape, a pressing protrusion dispose to oppose the accommodating groove and having a shape in which at least a portion protrudes from the second pressing surface, and a pressing avoidance portion connected to the pressing protrusion, and the pressing avoidance portion has a shape not applying pressure to a portion of the accommodating groove, adjacent to the electrode-accommodating portion.

## Description

### TECHNICAL FIELD

The disclosure and implementations disclosed in this patent document generally relate to an apparatus for forming a folding guide line forming a folding guide portion (folding guide line) in a sealing portion of a battery cell (secondary battery), and a battery cell.

### BACKGROUND

Secondary batteries (battery cells) have the convenience of being able to be charged and discharged, unlike primary batteries, and may be thus receiving much attention as power sources for various mobile devices, electric vehicles, energy storage devices, or the like.

A secondary battery may be manufactured as a pouch-type battery cell or a can-type battery cell. The pouch-type battery cell may have a structure in which an electrode assembly is accommodated in a flexible pouch case. The can-type battery cell may have a structure in which an electrode assembly is accommodated in a rigid case, and may be formed as a cylindrical battery cell or a square battery cell.

A pouch case of the pouch-type battery cell may include an electrode-accommodating portion accommodating an electrode assembly, and a sealing portion disposed around the electrode-accommodating portion and having a shape extending outwardly from the electrode-accommodating portion. The sealing portion may be formed by heat-melting (compressing) the inner layer of the pouch case, and may seal the electrode-accommodating portion from the outside.

### SUMMARY

A pouch-type battery cell may fold a sealing portion in which an electrode lead is not disposed. In order to easily fold the sealing portion, a folding guide portion (folding guide line) may be formed in the sealing portion. The folding guide portion may have a groove shape extending in a length direction of the sealing portion. The folding guide portion may be formed by heating and pressing the sealing portion. In this process, a resin contained in an inner layer of a pouch case may be melted by heat and pressure applied.

A molten resin formed in a process for forming the folding guide portion may be pushed in an outward direction from a portion pressed by the applied heat and pressure. In this case, some of the molten resin may be pushed toward the electrode-accommodating portion, and may be hardened in a state of penetrating into an accommodating space in the electrode-accommodating portion, to form a penetration region. When an amount of molten resin pushed toward the electrode assembly is large, there may be a problem that at least a portion of the penetration region is in contact with the electrode assembly, causing damage to the electrode assembly and reducing durability of the battery cell.

In addition, the penetration region exposed to the accommodation space in the electrode-accommodating portion may cause a deterioration in quality of a folding portion during a folding process or may cause damage to the folding portion.

According to an aspect of the present disclosure, an apparatus for forming a folding guide line and a battery cell, capable of controlling flow of a molten resin toward an electrode-accommodating portion in a process for forming a folding guide portion, may be provided.

According to an aspect of the present disclosure, an apparatus for forming a folding guide line and a battery cell, capable of preventing damage to an electrode assembly by a molten resin in a process for forming a folding guide portion, may be provided.

According to an aspect of the present disclosure, an apparatus for forming a folding guide line and a battery cell, capable of improving quality and durability of a folding portion, may be provided.

A battery cell manufactured by an apparatus for forming a folding guide line of the present disclosure may be widely applied in green technology fields such as an electric vehicle, a battery charging station, or solar power generation, wind power generation, or the like using batteries, or the like. In addition, the battery cell manufactured by the apparatus of the present disclosure may be used in an eco-friendly electric vehicle, a hybrid vehicle, or the like to prevent a change in climate by suppressing air pollution and greenhouse gas emissions.

In some embodiments of the present disclosure, an apparatus for forming a folding guide line of the present disclosure forming a folding guide portion in a sealing portion disposed around an electrode-accommodating portion of a battery cell, includes a first pressing tool and a second pressing tool, forming the folding guide portion by placing the sealing portion therebetween and pressing the sealing portion, wherein the first pressing tool includes a first pressing surface having a flat shape and an accommodating groove having a shape recessed from the first pressing surface, the second pressing tool includes a second pressing surface having a flat shape, a pressing protrusion dispose to oppose the accommodating groove and having a shape in which at least a portion protrudes from the second pressing surface, and a pressing avoidance portion connected to the pressing protrusion, and the pressing avoidance portion has a shape not applying pressure to a portion of the accommodating groove, adjacent to the electrode-accommodating portion.

In an embodiment, a distance between the pressing avoidance portion and the first pressing surface may be greater than a distance between the second pressing surface and the first pressing surface.

In an embodiment, the pressing avoidance portion may include an inclined surface having an incline with respect to the second pressing surface.

In an embodiment, the inclined surface may include a vertical surface, perpendicular to the first pressing surface.

In an embodiment, a distance between a center of the pressing protrusion and a center of the accommodating groove may be less than or equal to a distance between the first pressing surface and the second pressing surface.

In an embodiment, the pressing avoidance portion may include a stepped surface located farther from the first pressing surface than the second pressing surface.

In an embodiment, the pressure protrusion may include a central surface disposed in a central region of the pressing protrusion, and an outer side surface extended in a direction away from the first pressing surface from the central surface, and a radius of curvature of the central surface may be smaller than a radius of curvature of the outer side surface.

In an embodiment, the pressing protrusion may include a first portion located closer to the electrode-accommodating portion, based on a center of the pressing protrusion, and a second portion located farther from the electrode-accommodating portion than the first portion, and an outer side surface disposed in the first portion may be connected to the pressing avoidance portion through an extension surface, and an outer side surface disposed in the second portion may be connected to the second pressing surface.

In an embodiment, the second pressing tool may have a width, smaller than a width of the first pressing tool, based on a direction toward the electrode-accommodating portion.

In an embodiment, the second pressing tool may further include a third pressing surface connected to the second pressing surface and having a stepped difference from the second pressing surface by a preset distance, and a distance between the third pressing surface and the first pressing surface may be greater than a distance between the second pressing surface and the first pressing surface.

In an embodiment, the distance between the third pressing surface and the first pressing surface may be 1.5 to 2.5 times greater than the distance between the second pressing surface and the first pressing surface.

The apparatus according to an embodiment may further include a heating unit heating at least one of the first pressing tool or the second pressing tool.

A pouch-type battery cell according to the present disclosure includes an electrode assembly; and a pouch case including an electrode-accommodating portion forming an accommodating space for accommodating the electrode assembly, and a sealing portion disposed on at least a portion of a circumference of the electrode-accommodating portion and extending from the electrode-accommodating portion in an outward direction, wherein the sealing portion includes a folding guide portion formed by the apparatus described above.

A pouch-type battery cell according to an embodiment of the present disclosure includes an electrode assembly; and a pouch case including an electrode-accommodating portion forming an accommodating space for accommodating the electrode assembly, and a sealing portion disposed on at least a portion of a circumference of the electrode-accommodating portion and extending from the electrode-accommodating portion in an outward direction, wherein the sealing portion includes a folding guide portion, and the folding guide portion has a shape in which a thickness of a fusion layer in an edge portion adjacent to the electrode-accommodating portion is greater than a thickness of a fusion layer in a central region of the folding guide portion.

In an embodiment, the sealing portion may have a shape folded at least once, based on the folding guide portion.

### BRIEF DESCRIPTION OF DRAWINGS

Certain aspects, features, and advantages of the present disclosure are illustrated by the following detailed description with reference to the accompanying drawings.
FIG. 1 is a schematic diagram illustrating an example of a battery cell before a folding guide portion is formed.
FIGS. 2A to 2E are cross-sectional views of FIG. 1, taken along line I-I', sequentially illustrating a process of forming a folding portion in a sealing portion of a battery cell.
FIG. 3A is a schematic diagram illustrating a portion in which a folding guide portion is formed in "A "portion of FIG. 1, and FIG. 3B is a cross-sectional view illustrating a state in which a folding guide portion is formed.
FIG. 4 is a perspective view illustrating a battery cell according to an embodiment.
FIGS. 5A, 5B, and 5C illustrate an apparatus for forming a folding guide line according to an embodiment. FIG. 5A illustrates a state before a sealing portion is pressed, FIG. 5B illustrates a state in which the sealing portion is pressed to form a folding guide portion, and FIG. 5C illustrates an enlarged view of "B" portion of FIG. 5B.
FIGS. 6A, 6B, and 6C are schematic diagrams illustrating a modified example of the apparatus illustrated in FIG. 5C.
FIG. 7A is a schematic diagram illustrating a battery cell and an apparatus for forming a folding guide line before pressing a sealing portion.
FIG. 7B is an enlarged cross-sectional view illustrating a sealing portion of the battery cell illustrated in FIG. 7A.
FIG. 8A is a schematic diagram illustrating a battery cell and an apparatus for forming a folding guide line in a state in which a sealing portion is pressed.
FIG. 8B is an enlarged cross-sectional view illustrating a sealing portion of the battery cell illustrated in FIG. 8A.
FIGS. 9A, 9B, and 9C illustrate a battery cell and an apparatus for forming a folding guide line according to a comparative example, FIG. 9A illustrates a state before pressing a sealing portion, FIG. 9B illustrates a state after pressing a sealing portion to form a folding guide portion, and FIG. 9C is a cross-sectional view of a battery cell having a folding guide portion formed according to a comparative example.
FIGS. 10A, 10B, and 10C illustrate a battery cell and an apparatus for forming a folding guide line according to a modified example, FIG. 10A illustrates a state before pressing a sealing portion, FIG. 10B illustrates a state after pressing a sealing portion to form a folding guide portion, and FIG. 10C is a cross-sectional view of a battery cell having a folding guide portion formed according to a modified example.

### DETAILED DESCRIPTION

The same reference numbers or symbols in each drawing attached to this specification indicate parts or components that perform substantially the same function. For convenience of explanation and understanding, different embodiments may be described using the same reference numerals or symbols. That is, even if components having the same reference number may be illustrated in multiple drawings, the multiple drawings do not all represent an embodiment.

In the following description, singular expressions include plural expressions unless the context clearly dictates otherwise. Terms such as "include," "comprise," or the like may be intended to designate the presence of features, numbers, steps, operations, components, parts, or combinations thereof described in the specification, and one or more other features or numbers, it should be understood that this does not exclude in advance possibility of presence or addition of steps, operations, components, parts, or combinations thereof.

In addition, in the following description, expressions such as upward, above, on, upper portion, downward, below, lower portion, lateral, side surface, forward, front, rearward, rear, or the like may be expressed based on the direction illustrated in the drawings, and it should be noted in advance that when a direction of an object changes, it may be expressed differently.

Additionally, in this specification and claims, terms including ordinal numbers such as "first," "second," or the like may be used to distinguish between components. These ordinal numbers may be used to distinguish identical or similar components from each other, and the meaning of the term should not be interpreted limitedly due to the use of these ordinal numbers. For example, components combined with these ordinal numbers should not be interpreted as having a limited order of use or arrangement based on the number. As necessary, each ordinal number may be used interchangeably.

Hereinafter, embodiments of the present disclosure will be described with reference to the attached drawings. However, the idea of the present disclosure is not limited to the presented embodiments

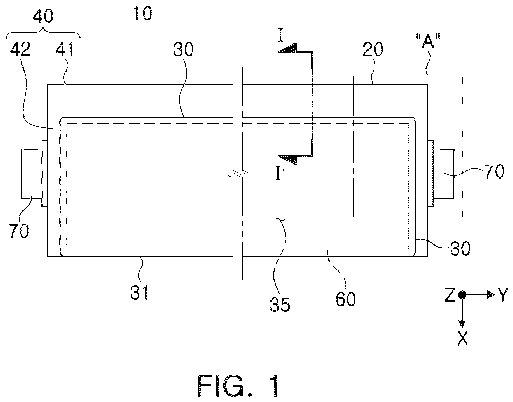

FIG. 1 is a schematic diagram illustrating an example of a battery cell 10 before a folding guide portion 45 is formed.

Referring to FIG. 1, a pouch-type battery cell 10 may include a pouch case 20 and an electrode assembly 60 accommodated in the pouch case 20. An electrode lead 70 connected to the electrode assembly 60 may be exposed to an external space of the pouch case 20. The electrode assembly 60 may include a positive electrode plate, a negative electrode plate, and a separator. The separator may be disposed between the positive electrode plate and the negative electrode plate.

The pouch case 20 may include an electrode-accommodating portion 30 forming an accommodating space 35 for accommodating the electrode assembly 60, and a sealing portion 40 disposed around the electrode-accommodating portion 30 and extending from the electrode-accommodating portion 30 in an outward direction. The sealing portion 40 may be heat-sealed to protect the electrode assembly 60 from the outside.

The sealing portion 40 may include a first sealing portion 41 in which the electrode lead 70 is not disposed, and a second sealing portion 42 in which the electrode lead 70 is disposed. When a single pouch case 20 is folded to form an electrode-accommodating portion 30, among four surfaces of the electrode-accommodating portion 30, a structure in which three surfaces are opened and one surface 31 is closed, may be configured. The sealing portion 40 may be formed on the three open surfaces of the electrode-accommodating portion 30.

A battery cell 10 according to an embodiment is not limited to a structure in which the sealing portion 40 is formed on three surfaces of the electrode-accommodating portion 30. For example, the battery cell 10 may also have a configuration in which two pouch cases 20 overlap to form an electrode-accommodating portion 30. In this case, the sealing portion 40 may be formed on all four surfaces of the electrode-accommodating portion 30.

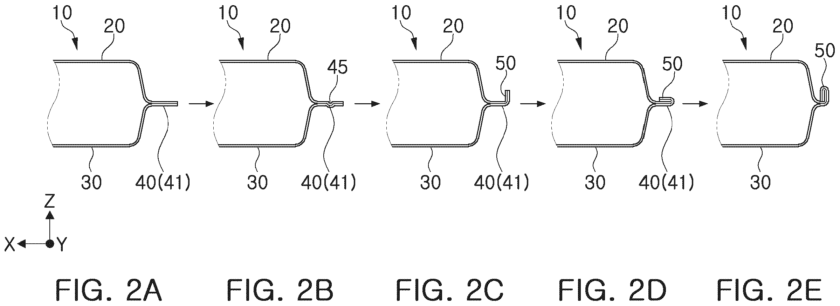

FIGS. 2A to 2E sequentially illustrate a process of forming a folding portion 50 in a sealing portion 40 of the battery cell 10. FIGS. 2A to 2E are cross-sectional views of FIG. 1, taken along line I-I', respectively, with an electrode assembly 60 omitted.

A sealing portion 40 may be folded, to increase bonding reliability of a sealed portion and minimize a volume occupied by the sealing portion 40.

Referring to FIG. 2A, a sealing portion 40 of a battery cell 10 may have an angle of 0 degrees before a folding process is performed. The folding process may be performed on a first sealing portion 41, among the sealing portions 40, in which an electrode lead 70 is not disposed.

In an embodiment, the sealing portion 40 may form a folding portion 50 folded at a specific angle after at least one folding process is performed.

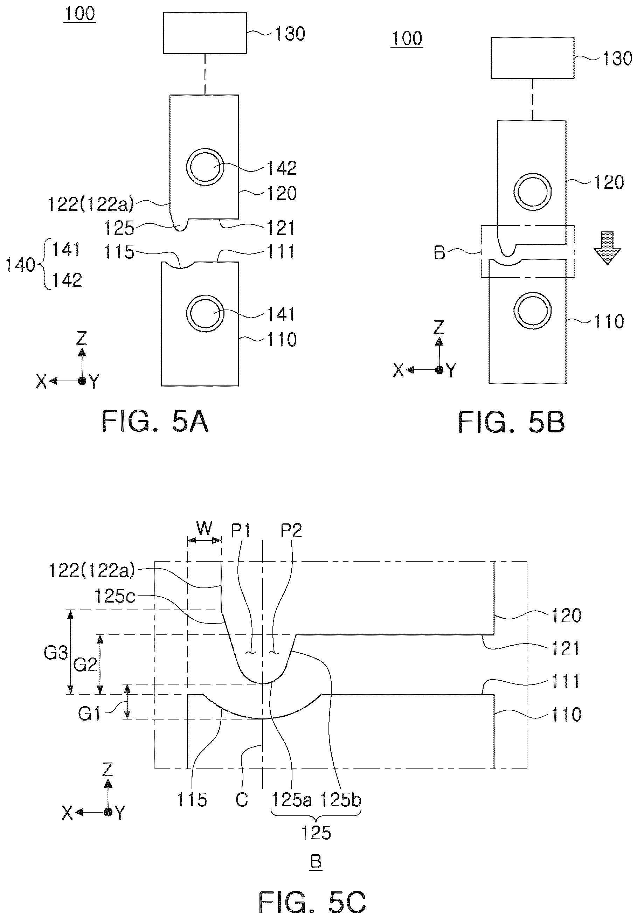

FIG. 2B illustrates a state in which a folding guide portion 45 is formed on the sealing portion 40 of the battery cell 10. The folding guide portion 45 may be formed as a line formed in a length direction of the sealing portion 40 at a predetermined distance spaced apart from the electrode assembly 60. The folding guide portion 45 may have a groove shape. As an example, the folding guide portion 45 may be formed by an apparatus for forming a folding guide line (for example, 100 of FIG. 5A) described below.

FIG. 2C illustrates the folding portion 50 in which the sealing portion 40 is folded based on the folding guide portion 45 through a first folding process. The first folding process may be a process in which the sealing portion 40 is folded at a specific angle (for example, 90 degrees) . Since the folding guide portion 45 having a groove shape is formed in advance in the sealing portion 40, the folding portion 50 may be easily formed by the folding guide portion 45.

FIG. 2D illustrates a second folding process in which the sealing portion 40 is additionally folded, based on the folding guide portion 45. Through the second folding process, the folding portion 50 may have a shape folded at 180 degrees.

FIG. 2E illustrates a shape in which the folding portion 50 is folded at 270 degrees through a third folding process. It is also possible to form the folding guide portion 45, even before forming the 270-degree folded folding portion 50 illustrated in FIG. 2E.

The folding guide portion 45 may be formed to perform any one of the first folding process, the second folding process, or the third folding process, described above. Folding process using the folding guide portion 45 is not limited to a process of folding at a specific angle such as 90 degrees, 180 degrees, or 270 degrees, described above. For example, in an embodiment, the folding process using the folding guide portion may be configured as a process of folding an angle of the sealing portion 40 at various angles such as 45 degrees, 60 degrees, 75 degrees, 120 degrees, 135 degrees, 150 degrees, 165 degrees, 195 degrees, 210 degrees, 225 degrees, 240 degrees, 255 degrees, or 285 degrees. The number of times the folding process are performed may also be varied more than once. In this manner, setting of the folding angle for the sealing portion 40 or the number of times the folding process may be performed may be varied, depending on final specifications of the battery cell 10.

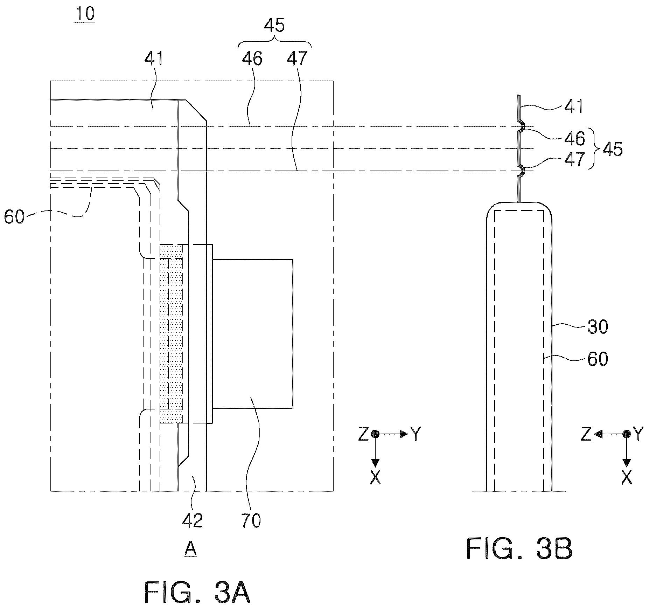

FIG. 3A is a schematic diagram illustrating a portion in which a folding guide portion 45 is formed in "A" portion of FIG. 1, and FIG. 3B is a cross-sectional view illustrating a state in which a folding guide portion 45 is formed.

Referring to FIGS. 3A and 3B together, a folding guide portion 45 may be formed in a first sealing portion 41, in a sealing portion 40, in which an electrode lead 70 is not disposed. The folding guide portion 45 may include at least one of a first folding guide line 46 performing first and second folding processes, as illustrated in FIGS. 2B to 2D, or a second folding guide line 47 performing a third folding process, as illustrated in FIG. 2E.

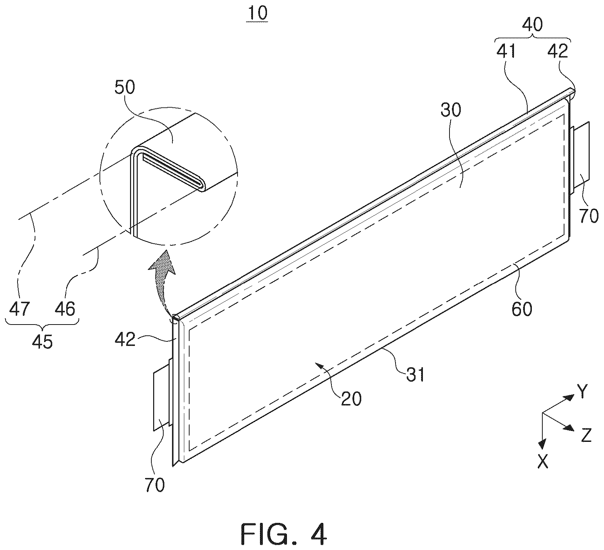

FIG. 4 is a perspective view illustrating a battery cell 10 according to an embodiment.

Referring to FIG. 4, a pouch-type battery cell 10 may include a pouch case 20 and an electrode assembly 60 accommodated inside the pouch case 20. The pouch case 20 may include an electrode-accommodating portion 30 in which an accommodating space 35 accommodating the electrode assembly 60 is formed, and a sealing portion 40 disposed around the electrode-accommodating portion 30.

The sealing portion 40 may include a first sealing portion 41 in which an electrode lead 70 is not disposed, and a second sealing portion 42 in which the electrode lead 70 is disposed.

The first sealing portion 41 may be folded, based on a folding guide portion 45, to form a folding portion 50. The folding portion 50 may be folded, based on a first folding guide line 46 and then further folded, based on a second folding guide line 47. In FIG. 4, the folding portion 50 is illustrated as having a 270-degree folded shape, but the folding portion 50 may be folded at an angle greater than 270 degrees. To prevent the folding portion 50 from being easily unfolded due to a spring back phenomenon, the folding portion 50 may be attached to the electrode-accommodating portion 30 using tape.

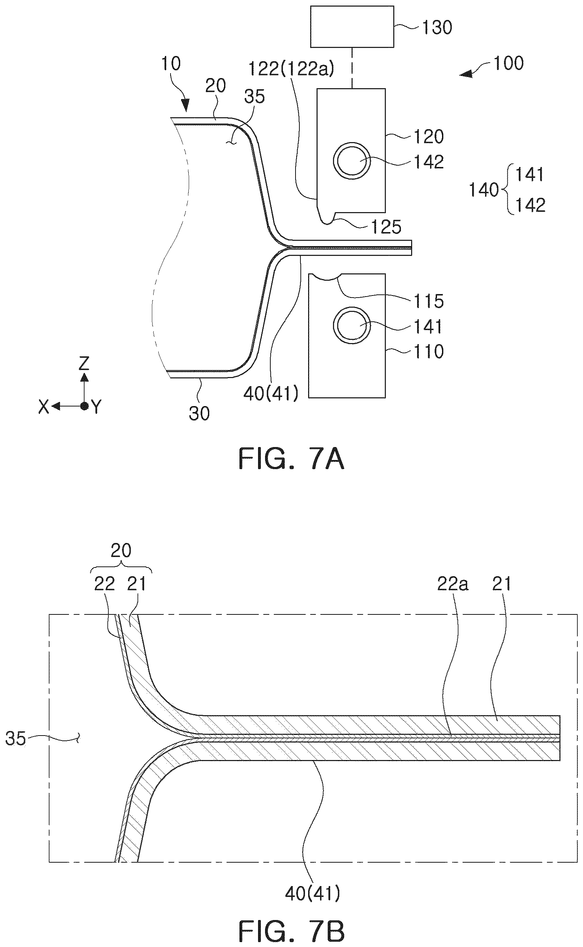

FIGS. 5A, 5B, and 5C illustrate an apparatus 100 for forming a folding guide line according to an embodiment. FIG. 5A illustrates a state before a sealing portion 40 is pressed, FIG. 5B illustrates a state in which the sealing portion 40 is pressed to form a folding guide portion 45, and FIG. 5C illustrates an enlarged view of "B" portion of FIG. 5B. FIGS. 5A, 5B, and 5C illustrate a state in which a battery cell 10 is omitted to clearly illustrate a configuration of the apparatus 100. In FIGS. 5A, 5B, and 5C, an electrode-accommodating portion 30 of the battery cell 10 may be disposed in a left direction (+X direction) of the drawing (see FIG. 7A).

A apparatus 100 for forming a folding guide line illustrated in FIGS. 5A, 5B, and 5C may form a folding guide portion 45 in a sealing portion 40 disposed around an electrode-accommodating portion 30 of a battery cell 10.

Referring to FIGS. 5A and 5B together with FIG. 7A, an apparatus 100 for forming a folding guide line according to an embodiment may include a first pressing tool 110 and a second pressing tool 120, and may additionally include a driving unit 130 and a heating unit 140.

The first pressing tool 110 and the second pressing tool 120 may form a folding guide portion 45 by pressing a sealing portion 40, with the sealing portion 40 interposed therebetween. For example, the sealing portion 40 may be pressed by the first pressing tool 110 and the second pressing tool 120 in a state in which the sealing portion 40 is disposed between the first pressing tool 110 and the second pressing tool 120. The first pressing tool 110 and the second pressing tool 120 may press the sealing portion 40 in a first direction (Z), perpendicular to the sealing portion 40.

The first pressing tool 110 may include a first pressing surface 111 having a flat shape, and an accommodating groove 115 having a shape recessed from the first pressing surface 111. The accommodating groove 115 may have a cross-section of a curved shape.

The second pressing tool 120 may include a flat second pressing surface 121 having a flat shape, a pressing protrusion 125 disposed to oppose the accommodating groove 115, and a pressing avoidance portion 122 connected to the pressing protrusion 125. The pressing protrusion 125 may be disposed to oppose the accommodating groove 115 at a position corresponding to the accommodating groove 115.

The pressing protrusion 125 may be disposed to face the accommodating groove 115, based on the first direction (Z). The pressing protrusion 125 may be formed as a protrusion portion having a curved shape, and may have a shape in which at least a portion protrudes from the second pressing surface 121. The pressing protrusion 125 may press the sealing portion 40 toward the accommodating groove 115 when forming the folding guide portion 45. The pressing protrusion 125 may have a width, smaller than a width of the accommodating groove 115, based on a second direction (X) in which the sealing portion 40 extends.

The pressing avoidance portion 122 may have a shape not applying pressure to a portion of the accommodating groove 115 closer to the electrode-accommodating portion 30, when forming the folding guide portion 45. Since the pressing avoidance portion 122 does not press the sealing portion 40 in a process of forming the folding guide portion 45, it may prevent the molten resin included in the sealing portion 40 from flowing toward the electrode-accommodating portion 30.

The pressing avoidance portion 122 may include an inclined surface 122a connected to the pressing protrusion 125. When the pressing avoidance portion 122 is formed as the inclined surface 122a, the inclined surface 122a may include a vertical surface, perpendicular to the first pressing surface 111.

An apparatus 100 for forming a folding guide line according to an embodiment may additionally include a driving unit 130. The driving unit 130 may drive at least one of the first pressing tool 110 or the second pressing tool 120 such that the first pressing tool 110 and the second pressing tool 120 move relative to each other in the first direction (Z) when forming the folding guide portion 45. For example, when the first pressing tool 110 has a fixed position, the driving unit 130 may elevate the second pressing tool 120. The driving unit 130 may be configured to drive the first pressing tool 110, or may be configured to drive both the first pressing tool 110 and the second pressing tool 120.

A apparatus 100 for forming a folding guide line according to an embodiment may additionally include a heating unit 140.

The heating unit 140 may increase a temperature of at least one of the first pressing tool 110 or the second pressing tool 120 when forming the folding guide portion 45. The heating unit 140 may include at least one of a first heater 141 disposed in the first pressing tool 110 or a second heater 142 disposed in the second pressing tool 120. Deformation of the sealing portion 40 may be facilitated by heating of the heating unit 140, and thus the folding guide portion 45 may be easily formed.

A heating temperature of the heating unit 140 and pressing force by the driving unit 130 may be set to a temperature and pressure suitable for forming the folding guide portion 45 in consideration of a melting temperature of the resin included in the pouch case 20, a thickness of the pouch case 20, or the like.

Referring to FIG. 5C, the pressing protrusion 125 may include a central surface 125a disposed in a central region of the pressing protrusion 125, and an outer side surface 125b extending away from the central surface 125a in a direction away from the first pressing surface 111. The central surface 125a of the pressing protrusion 125 may correspond to a central portion of the accommodating groove 115 (i.e., a region having a deep depth in the accommodating groove 115). For example, the central surface 125a of the pressing protrusion 125 may be defined as a portion adjacent to a center C of the pressing protrusion 125, and the outer side surface 125b may correspond to a portion extending from both sides of the central surface 125a in an outward direction. The outer side surface 125b may correspond to a portion further protruding than the second pressing surface 121.

A radius of curvature of the central surface 125a may be smaller than a radius of curvature of the outer side surface 125b. For example, the outer side surface 125b may be formed as a curved surface or a flat surface extending from the central surface 125a, and the radius of curvature of the outer side surface 125b may be greater than the radius of curvature of the central surface 125a. Therefore, a distance between the pressing protrusion 125 and the accommodating groove 115 may have a smaller value at the central surface 125a of the pressing protrusion 125 and a larger value at the outer side surface 125b. Therefore, when the folding guide portion 45 is formed, a molten resin heated and pressed between the pressing protrusion 125 and the accommodating groove 115 may flow toward the outer side surface 125b and gather in a free space around the outer side surface 125b. For example, a free space corresponding to a volume of the molten resin heated and pressed and pushed out between the pressing protrusion 125 and the accommodating groove 115 may be formed around the outer side surface 125b of the pressing protrusion 125. In particular, since the pressing avoidance portion 122 may be configured not to press the sealing portion 40 in a process of forming the folding guide portion 45, the molten resin may be restricted from flowing toward the electrode-accommodating portion 30 in a region corresponding to the pressing avoidance portion 122. In addition, the molten resin formed between the pressing protrusion 125 and the accommodating groove 115 may be restricted from flowing toward the electrode-accommodating portion 30 in a region corresponding to the pressing avoidance portion 122.

The accommodating groove 115 may have a constant radius of curvature, but is not limited thereto. For example, the accommodating groove 115 may have a radius of curvature of a central portion smaller than a radius of curvature of an outer side portion.

The pressing protrusion 125 may include a first portion P1 located closer to the electrode-accommodating portion 30, and a second portion P2 located further from the electrode-accommodating portion 30 than the first portion P1, based on the center C of the pressing protrusion 125. The outer side surface 125b located on the second portion P2 may be connected to the second pressing surface 121.

The outer side surface 125b located on the first portion P1 may be connected to the pressing avoidance portion 122 through an extension surface 125c. One end of the extension surface 125c may be connected to the outer side surface 125b, and the other end of the extension surface 125c may be connected to the pressing avoidance portion 122. The extension surface 125c may be configured as a region larger than a distance between the second pressing surface 121 and the first pressing surface 111. The extension surface 125c may have a radius of curvature, equal to a radius of curvature of the outer side surface 125b, but is not limited thereto.

In FIG. 5C, it is illustrated that the pressing avoidance portion 122 is connected to the outer side surface 125b of the pressing protrusion 125 through the extension surface 125c of the pressing protrusion 125, but the pressing avoidance portion 122 is also directly connected to the outer side surface 125b of the pressing protrusion 125.

A shortest distance G3 between the pressing avoidance portion 122 and the first pressing surface 111 may have a value greater than a distance G2 between the second pressing surface 121 and the first pressing surface 111. The distance G2 between the first pressing surface 111 and the second pressing surface 121 may have a value corresponding to the thickness of the sealing portion 40 (for example, 0.3 mm), and the shortest distance G3 between the pressing avoidance portion 122 and the first pressing surface 111 may have a value greater than a thickness of the sealing portion 40. Therefore, when the sealing portion 40 is pressed between the first pressing surface 111 and the second pressing surface 121, the sealing portion 40 may not be pressed by the pressing avoidance portion 122.

The pressing avoidance portion 122 may include an inclined surface 122a having an incline with respect to the second pressing surface 121. The inclined surface 122a may have an angle exceeding 0 degrees with respect to the second pressing surface 121, based on the direction (X) in which the second pressing surface 121 extends toward the electrode-accommodating portion 30. For example, the angle formed by the inclined surface 122a with the second pressing surface 121 may have a value exceeding 15 degrees. As illustrated in FIG. 5C, the inclined surface 122a may be formed at a portion connected to the pressing protrusion 125, and may include a vertical surface, perpendicular to the first pressing surface 111.

The second pressing tool 120 may have a width, smaller than a width of the first pressing tool 110, based on a direction toward the electrode-accommodating portion 30. For example, the first pressing tool 110 may have a shape protruding by a certain width W from the second pressing tool 120, based on a direction toward the electrode-accommodating portion 30. For example, the pressing avoidance portion 122 of the second pressing tool 120 may be located further from the electrode-accommodating portion 30 than an end portion of the first pressing tool 110 facing the electrode-accommodating portion 30.

A distance G1 between a center C of the pressing protrusion 125 and a center C of the accommodating groove 115 may have a value smaller than or equal to the distance G2 between the first pressing surface 111 and the second pressing surface 121. For example, the distance G2 between the first pressing surface 111 and the second pressing surface 121 may have a value corresponding to a thickness of the sealing portion 40, and the distance G1 between the center C of the pressing protrusion 125 and the center C of the accommodating groove 115 may have a value smaller than the thickness of the sealing portion 40. In this case, the sealing portion 40 pressed between the pressing protrusion 125 and the accommodating groove 115 has a greater pressing force at the center C of the pressing protrusion 125, such that the folding guide portion 45 may be easily formed.

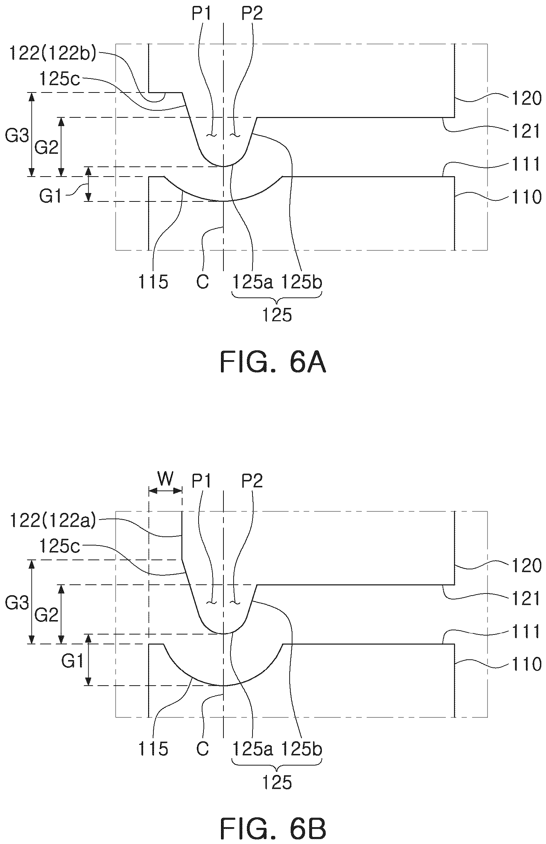

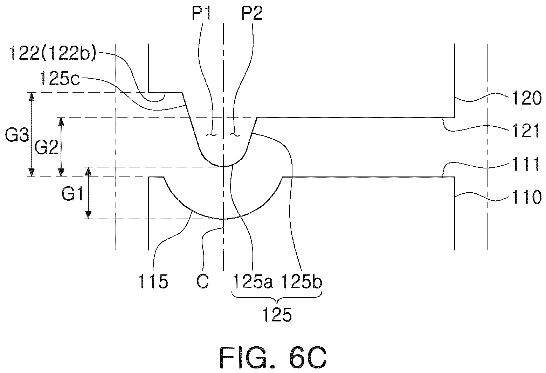

FIGS. 6A, 6B, and 6C are schematic diagrams illustrating a modified example of the apparatus 100 illustrated in FIG. 5C.

A modified example illustrated in FIG. 6A may be different from the embodiment illustrated in FIG. 5C in view of a shape of a pressing avoidance portion 122.

A pressing avoidance portion 122 illustrated in FIG. 6A may include a stepped surface 122b located further from a first pressing surface 111 than a second pressing surface 121. A distance G3 between the stepped surface 122b and the first pressing surface 111 may be greater than a distance G2 between the first pressing surface 111 and the second pressing surface 121. Therefore, the pressing avoidance portion 122 may not apply pressure to a portion of an accommodating groove 115 located closer to an electrode-accommodating portion 30.

When the pressing avoidance portion 122 includes the stepped surface 122b, the stepped surface 122b may be connected to an extension surface 125c of a pressing protrusion 125. Since the extension surface 125c has a shape extending in a direction farther from the first pressing surface 111 than the second pressing surface 121, a sealing portion 40 disposed between the stepped surface 122b and the first pressing surface 111 may not be pressed. Therefore, in a process of forming a folding guide portion 45, a molten resin included in the sealing portion 40 may be prevented or restricted from flowing toward the electrode-accommodating portion 30.

A modified example illustrated in FIG. 6B may be different from the embodiment illustrated in FIG. 5C in view that a distance G1 between a center C of a pressing protrusion 125 and a center C of an accommodating groove 115 has a larger value. In the modified example illustrated in FIG. 6B, the distance G1 between the center C of the pressing protrusion 125 and the center C of the accommodating groove 115 may have the same value as a distance G2 between a first pressing surface 111 and a second pressing surface 121. In this case, since a radius of curvature of an outer side surface 125b of the pressing protrusion 125 may be greater than a radius of curvature of a central surface 125a, a free space corresponding to a volume of a resin melted and pushed out between the pressing protrusion 125 and the accommodating groove 115 may be formed around the outer side surface 125b of the pressing protrusion 125.

A modified example illustrated in FIG. 6C may be different from the embodiment illustrated in FIG. 6A in view that a distance G1 between a center C of a pressing protrusion 125 and a center C of an accommodating groove 115 has a larger value. In the modified example illustrated in FIG. 6C, the distance G1 between the center C of the pressing protrusion 125 and the center C of the accommodating groove 115 may have the same value as a distance G2 between a first pressing surface 111 and a second pressing surface 121. Even in this case, since a radius of curvature of an outer side surface 125b of the pressing protrusion 125 may be greater than a radius of curvature of a central surface 125a, a free space corresponding to a volume of a resin melted and pushed out from the sealing portion 40 may be formed around the outer side surface 125b of the pressing protrusion 125.

FIG. 7A is a schematic diagram illustrating a battery cell 10 and an apparatus 100 for forming a folding guide line before pressing a sealing portion 40, and FIG. 7B is an enlarged cross-sectional view illustrating a sealing portion 40 of the battery cell 10 illustrated in FIG. 7A.

An outer layer 21 may include a metal layer and an insulating layer. The metal layer may secure mechanical strength of a pouch case 20, and may prevent external air, external moisture, or the like from flowing into an internal space of a battery cell 10. The metal layer may include aluminum or aluminum alloy. In a case in which the metal layer include aluminum or aluminum alloy, it is advantageous in that weight is reduced, electrochemical properties of an electrode assembly 60 and an electrolyte are improved, heat dissipation or the like is considered, while securing mechanical strength above a certain level. Various materials other than aluminum may be used for the metal layer.

The insulating layer may be formed of a material having electrical insulation, and may be provided at an external side of the metal layer, to protect the battery cell 10 from the outside, and, at the same time, to electrically insulate the electrode assembly 60 and the metal layer from the outside.

An inner layer 22 may be formed at an internal side of the outer layer 21. For example, the inner layer 22 may be formed at an internal side of the metal layer. The inner layer 22 may be formed of a material having electrical insulation and adhesiveness. For example, the inner layer 22 may include casted polypropylene (CPP), polypropylene (PP), or the like.

A sealing portion 40 may be formed by heating and pressing inner layers 22 contacting each other in a sealing process, and by performing thermal fusion. Therefore, after the sealing process, a fusion layer 22a hardened after a resin contained in the inner layer 22 is melted in a heated and pressed portion may be formed in the sealing portion 40.

The sealing portion 40 of the battery cell 10 may be disposed between a first pressing surface 111 of a first pressing tool 110 and a second pressing surface 121 of a second pressing tool 120 in a state in which the fusion layer 22a is formed.

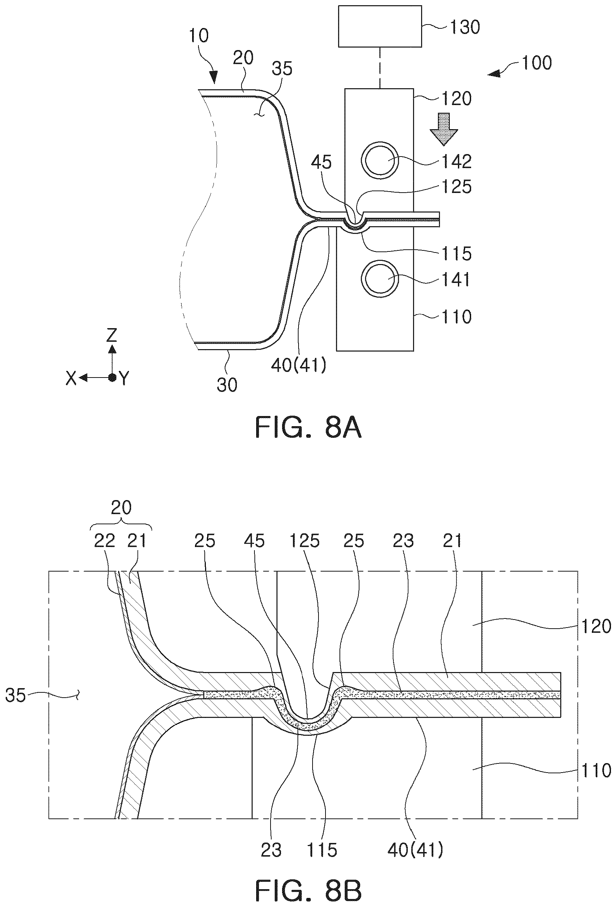

FIG. 8A is a schematic diagram illustrating a battery cell 10 and an apparatus 100 for forming a folding guide line in a state in which a sealing portion 40 is pressed, and FIG. 8B is an enlarged cross-sectional view illustrating a sealing portion 40 of the battery cell 10 illustrated in FIG. 8A.

Referring to FIG. 8A, to form a folding guide portion 45, a sealing portion 40 of a battery cell 10 may be heated and pressed, in a state in which the sealing portion 40 is located between a first pressing surface 111 of a first pressing tool 110 and a second pressing surface 121 of a second pressing tool 120. For example, a driving unit 130 may press the sealing portion 40 at a preset pressure by moving the second pressing tool 120 downward in the first direction (Z). A first heater 141 and a second heater 142 of a heating unit 140 may heat the first pressing tool 110 and the second pressing tool 120 to a preset temperature, respectively.

FIG. 8B illustrates a folding guide portion 45 formed in the sealing portion 40 by heating and pressing of the first pressing tool 110 and the second pressing tool 120. The folding guide portion 45 may include a first folding guide line 46.

The folding guide portion 45 may be formed between a pressing protrusion 125 and an accommodating groove 115 by heating and pressing of the first pressing tool 110 and the second pressing tool 120. The folding guide portion 45 may form a groove shape formed by compressing one surface (upper surface) of the sealing portion 40 and tensing the other surface (lower surface).

A resin included in the sealing portion 40 may be melted by heating and pressing. The resin melted by heating and pressing between the pressing protrusion 125 and the accommodating groove 115 may flow from a central surface (125a of FIG. 5C) of the pressing protrusion 125 toward an outer side surface (125b of FIG. 5C). Due to a difference in radius of curvature or a difference in gradient between the pressing protrusion 125 and the accommodating groove 115, a free space in which the molten resin may gather may be formed in a boundary region between the outer side surface 125b and a pressing avoidance portion 122, and in a boundary region between the outer side surface 125b and the second pressing surface 121.

Melted resin, which may be heated and pressed between the pressing protrusion 125 and the accommodating groove 115, may be collected in a boundary region around the outer side surface 125b, and may then be hardened to form a lumped region 25. In this manner, the molten resin may be accommodated in the lumped region 25 formed between the pressing protrusion 125 and the accommodating groove 115, such that it may be restricted from flowing out of the lumped region 25. In addition, some of the melted resin between the first pressing surface 111 and the second pressing surface 121 may be collected in a free space to form a lumped region 25.

A resin melted in a process of forming the folding guide portion 45 may be hardened to form a fusion layer 23, and the fusion layer 23 may include a lumped region 25 having a thicker shape than other portions.

The folding guide portion 45 may have a shape in which a thickness of the fusion layer 23 in an edge portion adjacent to the electrode-accommodating portion 30 (i.e., a portion of an outer side surface 125b of the pressing protrusion 125) is greater than a thickness of the fusion layer 23 in a central region of the folding guide portion 45 (i.e., a portion of a central surface 125a of the pressing protrusion 125) . For example, the thickness of the fusion layer 23 in the lumped region 25 may have a thicker value than the fusion layer 23 in a portion corresponding to the central surface 125a of the pressing protrusion 125.

In particular, since the pressing avoidance portion 122 may be configured not to press the sealing portion 40 in the process of forming the folding guide portion 45, flow of the molten resin in a region corresponding to the pressing avoidance portion 122 may be restricted. For example, since the pressing avoidance portion 122 does not press the sealing portion 40, the molten resin may be prevented from being pushed toward the electrode-accommodating portion 30 in a region corresponding to the pressing avoidance portion 122. In addition, the molten resin formed between the pressing protrusion 125 and the accommodating groove 115 may be restricted from flowing toward the electrode-accommodating portion 30 in a region corresponding to the pressing avoidance portion 122.

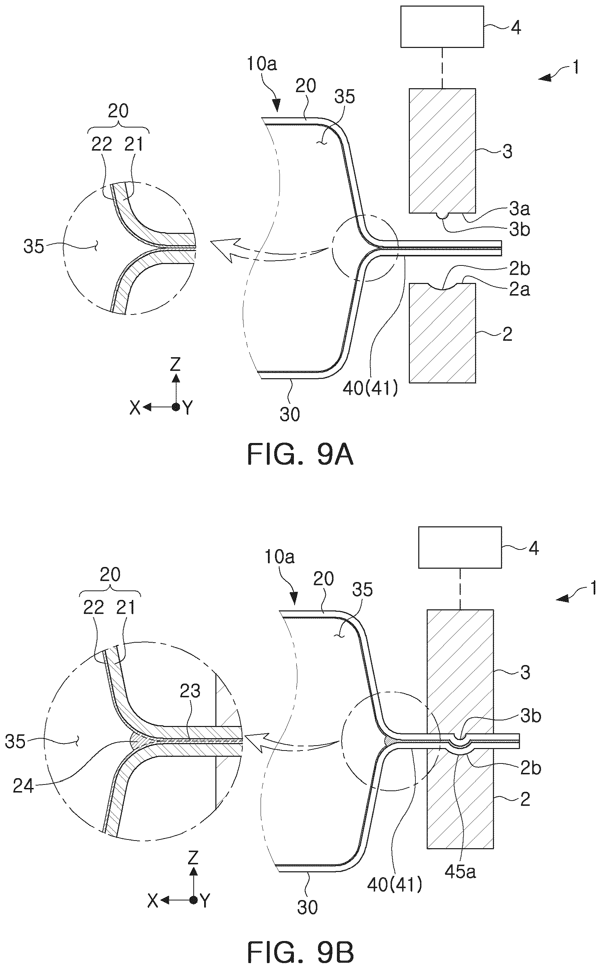

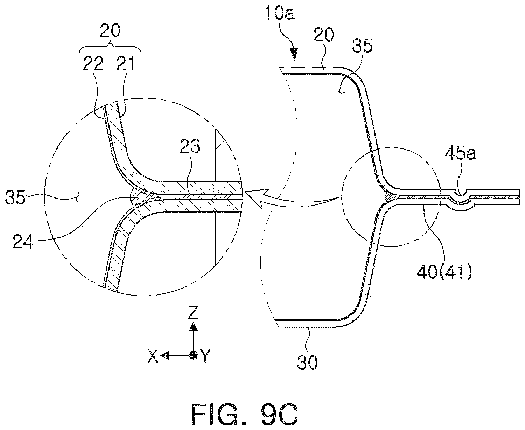

FIGS. 9A, 9B, and 9C illustrate a battery cell 10a and an apparatus 1 for forming a folding guide line according to a comparative example, FIG. 9A illustrates a state before pressing a sealing portion 40, FIG. 9B illustrates a state after pressing a sealing portion 40 to form a folding guide portion 45a, and FIG. 9C is a cross-sectional view of a battery cell 10a having a folding guide portion 45a formed according to a comparative example.

Referring to FIGS. 9A and 9B, an apparatus 1 for forming a folding guide line according to a comparative example may include a lower pressing tool 2 and an upper pressing tool 3. The lower pressing tool 2 may include a lower pressing surface 2a and an accommodating groove 2b, and the upper pressing tool 3 may include an upper pressing surface 3a and a pressing protrusion 3b.

The lower pressing surface 2a may be located at both sides of the accommodating groove 2b, and the upper pressing surface 3a may be also located at both sides of the pressing protrusion 3b. Therefore, when a sealing portion 40 is heated and pressed between the upper pressing surface 3a and the lower pressing surface 2a to form a folding guide portion 45a, a molten resin generated in the sealing portion 40 located close to an electrode-accommodating portion 30 may be pressed between the upper pressing surface 3a and the lower pressing surface 2a, and may be pushed toward the electrode-accommodating portion 30.

Therefore, as illustrated in FIGS. 9B and 9C, a battery cell 10a according to the comparative example may allow the molten resin pressed between the upper pressing surface 3a and the lower pressing surface 2a to penetrate into an accommodating space 35 formed in the electrode-accommodating portion 30, to form a penetration region 24. At least a portion of the penetration region 24 may be in contact with an electrode assembly 60, thereby causing damage to the electrode assembly 60 and reducing durability of the battery cell 10a. In addition, the penetration region exposed to the accommodation space 35 in the electrode-accommodating portion 30 may cause a deterioration in quality of a folding portion 50 during a folding process, or may cause damage to the folding portion 50.

As described with reference to FIGS. 5A to 8B, according to an embodiment of the present disclosure, since a pressing avoidance portion 122 may be disposed in a sealing portion 40 adjacent to an electrode assembly 60, a phenomenon in which melted resin in the sealing portion 40 adjacent to the electrode assembly 60 and/or melted resin in the sealing portion 40 disposed between a pressing protrusion 125 and an accommodating groove 115 is exposed or penetrated into an accommodation space 35 of an electrode-accommodating portion 30 may be prevented or limited.

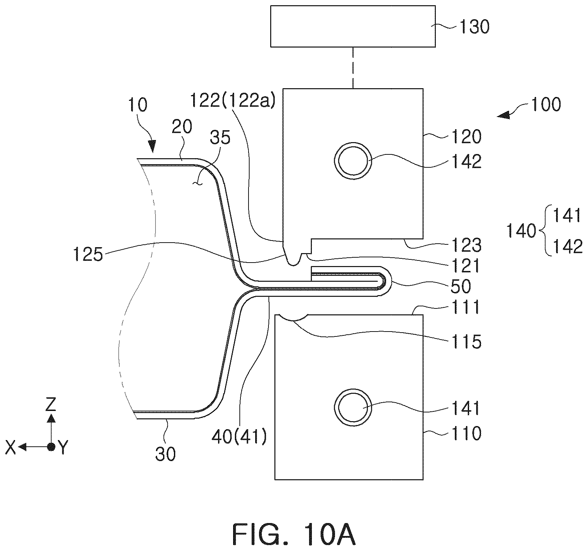

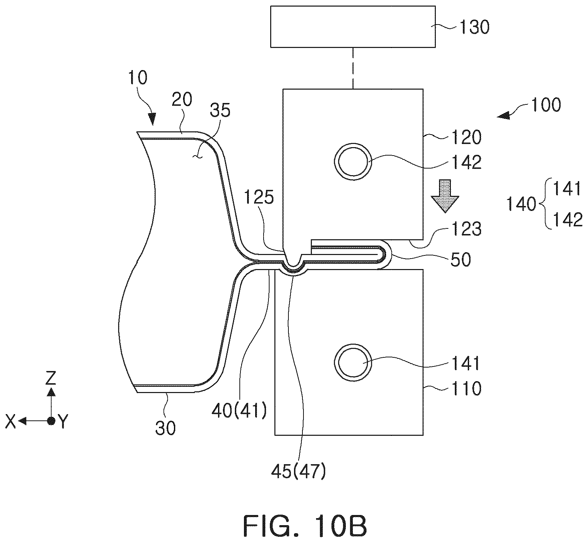

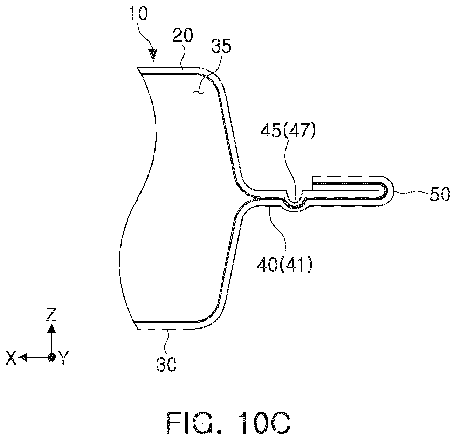

FIGS. 10A, 10B, and 10C illustrate an apparatus 100 for forming a folding guide line according to a modified example, FIG. 10A illustrates a state before pressing a sealing portion 40, FIG. 10B illustrates a state after pressing a sealing portion 40 to form a folding guide portion 45, and FIG. 10C is a cross-sectional view of a battery cell 10 having a folding guide portion 45 formed according to a modified example.

A folding guide portion 45 formed by an apparatus 100 for forming a folding guide line according to the present disclosure may also be used to additionally fold a 180-degree folded folding portion 50. For example, a second folding guide line 47 may be formed to additionally perform folding in a 180-degree folded state, as in FIG. 2D.

An embodiment illustrated in FIGS. 10A and 10B may include a first pressing tool 110, a second pressing tool 120, a driving unit 130, and a heating unit 140. The first pressing tool 110, the driving unit 130, and the heating unit 140 may have the configurations described with reference to FIGS. 5A to 8B. The second pressing tool 120 may include a second pressing surface 121, a pressure protrusion 125, and a pressing avoidance unit 122, similar to the embodiment illustrated in FIG. 5A.

In the embodiment illustrated in FIGS. 10A and 10B, the second pressing tool 120 may additionally include a third pressing surface 123. The third pressing surface 123 may be connected to the second pressing surface 121 and may have a stepped difference having a preset distance from the second pressing surface 121.

A portion in which the 180-degree folded folding portion 50 is formed may have a thickness approximately twice a thickness of an unfolded sealing portion 40. Therefore, the third pressing surface 123 may have a stepped difference corresponding to the thickness of the sealing portion 40, as compared to the second pressing surface 121. For example, a distance between the third pressing surface 123 and the first pressing surface 111 may have a value approximately twice that of a distance between the second pressing surface 121 and the first pressing surface 111. The distance between the third pressing surface 123 and the first pressing surface 111 may have a value exceeding twice that of the distance between the second pressing surface 121 and the first pressing surface 111 not to press the 180-degree folded portion, or may have a value less than twice that to additionally press the 180-degree folded portion. For example, the distance between the third pressing surface 123 and the first pressing surface 111 may have a value 1.5 to 2.5 times greater than the distance between the second pressing surface 121 and the first pressing surface 111.

As illustrated in FIG. 10C, the folding guide portion 45 of the battery cell 10 may include a second folding guide line 47 also used to additionally fold the 180-degree folded folding portion 50. Even when the second folding guide line 47 is formed by an apparatus 100 for forming a folding guide line in which the pressing avoidance portion 122 is disposed, a phenomenon in which melted resin is exposed or penetrated into an accommodating space 35 of an electrode-accommodating portion 30 during a process of forming the second folding guide line 47 may be prevented or limited.

According to an embodiment of the present disclosure, it is possible to control flow of a molten resin toward an electrode-accommodating portion in a process for forming a folding guide portion.

In addition, according to an embodiment of the present disclosure, it is possible to prevent or limit damage to an electrode assembly by a molten resin in a process for forming a folding guide portion.

In addition, according to an embodiment of the present disclosure, it is possible to improve quality and durability of a folding portion.

Only specific examples of implementations of certain embodiments may be described. Variations, improvements and enhancements of the disclosed embodiments and other embodiments may be made based on the disclosure of this patent document.

## Claims

1. An apparatus for forming a folding guide line forming a folding guide portion in a sealing portion disposed around an electrode-accommodating portion of a battery cell, comprising:
a first pressing tool and a second pressing tool, forming the folding guide portion by placing the sealing portion therebetween and pressing the sealing portion,
wherein the first pressing tool includes a first pressing surface having a flat shape and an accommodating groove having a shape recessed from the first pressing surface,
the second pressing tool includes a second pressing surface having a flat shape, a pressing protrusion dispose to oppose the accommodating groove and having a shape in which at least a portion protrudes from the second pressing surface, and a pressing avoidance portion connected to the pressing protrusion, and
the pressing avoidance portion has a shape not applying pressure to a portion of the accommodating groove, adjacent to the electrode-accommodating portion.

2. The apparatus of claim 1, wherein a distance between the pressing avoidance portion and the first pressing surface is greater than a distance between the second pressing surface and the first pressing surface.

3. The apparatus of claim 1 or claim 2, wherein the pressing avoidance portion comprises an inclined surface having an incline with respect to the second pressing surface.

4. The apparatus of claim 3, wherein the inclined surface comprises a vertical surface, perpendicular to the first pressing surface.

5. The apparatus of any one of claims 1 to 4, wherein a distance between a center of the pressing protrusion and a center of the accommodating groove is less than or equal to a distance between the first pressing surface and the second pressing surface.

6. The apparatus of any one of claims 1 to 5, wherein the pressing avoidance portion comprises a stepped surface located farther from the first pressing surface than the second pressing surface.

7. The apparatus of any one of claims 1 to 6, wherein the pressing protrusion comprises a central surface disposed in a central region of the pressing protrusion, and an outer side surface extended in a direction away from the first pressing surface from the central surface, and
a radius of curvature of the central surface is smaller than a radius of curvature of the outer side surface.

8. The apparatus of claim 7, wherein the pressing protrusion comprises a first portion located closer to the electrode-accommodating portion, based on a center of the pressing protrusion, and a second portion located farther from the electrode-accommodating portion than the first portion,
wherein an outer side surface disposed in the first portion is connected to the pressing avoidance portion through an extension surface, and
an outer side surface disposed in the second portion is connected to the second pressing surface.

9. The apparatus of any one of claims 1 to 8, wherein the second pressing tool has a width, smaller than a width of the first pressing tool, based on a direction toward the electrode-accommodating portion.

10. The apparatus of any one of claims 1 to 9, wherein the second pressing tool further comprises a third pressing surface connected to the second pressing surface and having a stepped difference from the second pressing surface by a preset distance,
a distance between the third pressing surface and the first pressing surface is greater than a distance between the second pressing surface and the first pressing surface.

11. The apparatus of claim 10, wherein the distance between the third pressing surface and the first pressing surface is 1.5 to 2.5 times greater than the distance between the second pressing surface and the first pressing surface.

12. The apparatus of any one of claims 1 to 11, further comprising a heating unit heating at least one of the first pressing tool or the second pressing tool.

13. A battery cell comprising:
an electrode assembly; and
a pouch case including an electrode-accommodating portion forming an accommodating space for accommodating the electrode assembly, and a sealing portion disposed on at least a portion of a circumference of the electrode-accommodating portion and extending from the electrode-accommodating portion in an outward direction,
wherein the sealing portion includes a folding guide portion, and
the folding guide portion has a shape in which a thickness of a fusion layer in an edge portion adjacent to the electrode-accommodating portion is greater than a thickness of a fusion layer in a central region of the folding guide portion.

14. The battery cell of claim 13, wherein the sealing portion has a shape folded at least once, based on the folding guide portion.
